# EUROPÄISCHE PATENTSCHRIFT

(11) **EP 0 615 084 B1**
(45) Veröffentlichungstag und Bekanntmachung des Hinweises auf die Patenterteilung: **11.10.1995**
(21) Anmeldenummer: 93104036.4
(22) Anmeldetag: 12.03.1993
(51) Int. Cl.: F16J 15/32, F02F 11/00

(54) **Verfahren zum Herstellen einer Abdichtung**
Method for manufacturing a seal
Méthode de fabrication d'un joint d'étanchéité

(43) Veröffentlichungstag der Anmeldung: 14.09.1994
(73) Patentinhaber: Dichtungstechnik G. Bruss GmbH & Co. KG, D-22955 Hoisdorf (DE)
(72) Erfinder: Hering, Jürgen, W-2359 Sievershütten (DE); Johnen, Rolf, W-2071 Hoisdorf (DE); Upper, Gerd, Dr., W-2071 Hoisdorf (DE)
(74) Vertreter: Liesegang, Roland, Dr.-Ing.

(56) Entgegenhaltungen:
- EP-A- 0 139 503
- DE-A- 3 634 735
- GB-A- 2 184 174

## Beschreibung

Die Erfindung betrifft ein Verfahren zum Herstellen einer Wellenabdichtung sowie eine damit hergestellte Wellenabdichtung gemäß dem Oberbegriff des Anspruchs 1.

Bei einer bekannten Abdichtung dieser Art (EP-A-0 139 503) wird zunächst der Wellendichtring an den radialen Flansch eines im Profil L-förmigen Blechringes angeformt. Zum Verbinden mit einer Dichtungsaufnahme wird der äußere, achsparallel stehende Abschnitt dieses Blechringes in den Formhohlraum einer Spritzform eingesetzt, so daß bei der fertigen Abdichtung der äußere Abschnitt des Blechringes in einer als Innennut ausgebildeten Aussparung der als Kunststoff-Gußteil geformten Dichtungsaufnahme aufgenommen und an diese Dichtungsaufnahme beidseitig durch Elastomermaterial angebunden ist, das auch für die statische Dichtung verwendet ist und mit dieser zusammenhängt. Der so gebildete Dichtungsmodul bestehend aus der Dichtungsaufnahme mit dem Wellendichtring und der statischen Dichtung schafft eine vorgefertigte, austauschbare Einheit. Die beschriebene Anbindung über den achsparallelen Abschnitt des L-förmigen Blechringes erfordert das Formen der Dichtungsaufnahme aus Kunststoff auf dem Blechring, entweder vor oder nach dem Anformen des Wellendichtringes am inneren Abschnitt des Blechringes, wobei das beidseitig des achsparallelen Abschnittes eingespritzte Elastomermaterial für eine elastische Anbindung sorgt. Aufgrund dieser Art der Gestaltung lassen sich die geforderten geringen radialen Toleranzen zum Erreichen der Koaxialität von Dichtlippe zu Welle nicht ohne weiteres einhalten. Problematisch ist ferner das Setzen oder Kriechen des Kunststoff-Gußteiles unter der Schraubenkraft, was in der Praxis zu Leckagen zwischen Kurbelgehäuse und Abdichtung führen kann.

Für den überwiegenden Einsatzzweck der Erfindung der abtriebsseitigen Kurbelwellenabdichtung bei Kraftfahrzeugen, wobei die Kurbelwelle, die Stirnwand des Kurbelgehäuses und die dazu senkrecht verlaufende Wand des Kurbelgehäuses gegenüber der Ölwanne abzudichten sind, ist eine Abdichtung mit einem Leichtmetall-Druckgußteil als Dichtungsaufnahme millionenfach bewährt. Zur Montage einer solchen Abdichtung werden sämtliche Teile, nämlich der Radial-Wellendichtring, das Druckgußteil, eine Flachdichtung als statische Dichtung über der Stirnwand des Kurbelgehäuses etc. einzeln bereitgestellt, was bei der Montage mehrere Arbeitsschritte erfordert. Diese vielteilige Lösung bringt vielfache Fehlermöglichkeiten, insbesondere die Möglichkeit der Beschädigung der einzelnen Elemente der Wellenabdichtung mit sich. In diesem Zusammenhang haben Untersuchungen der Anmelderin gezeigt, daß Wellenabdichtungen vor allem wegen Beschädigungen im Dichtkantenbereich des Wellendichtringes als Ausschuß aussortiert werden müssen.

Die Erfindung strebt an, ein Verfahren zur Herstellung einer Abdichtung zu schaffen, bei dem der dynamische Wellendichtring als auch die statische Dichtung in eine Dichtungsaufnahme eingebaut als vorgefertigte Einheit bereitgestellt wird, wobei jedoch weitestgehend auf unveränderte bewährte Elemente, insbesondere auch das Leichtmetall-Druckgußteil zur Aufnahme der Dichtungen zurückgegriffen werden soll. Dabei soll erreicht werden, daß die relativ teuren Druckgußteile auch bei Fehlerhaftigkeit insbesondere des Wellendichtringes wiederverwendbar gemacht werden, wobei gleiche Druckgußteile für unterschiedliche Dichtungsmodule zum Ersteinbau und zum Austausch als Ersatzteil im Kundendienst verwendbar gemacht werden sollen.

Bei einem bekannten Konzept, bei dem ein Wellendichtring und eine statische Dichtung an eine Dichtungsaufnahme zur Bildung einer Wellenabdichtung mit einem einzigen Formwerkzeug angeformt werden (DE-C 36 34 735), wobei allerdings die Dichtungsaufnahme aus einem Blech gezogen ist, stehen einer Vorfertigung folgende Schwierigkeiten entgegen: Da die Druckgußteile nicht spanend bearbeitet und mit den relativ großen Toleranzen des Druckgußverfahrens hergestellt wurden, muß das Formwerkzeug so ausgelegt werden, daß an den Abdruckkanten eine plastische Verformung des Druckgußträgers erfolgt. Bei einem zweiten Produktionsversuch im gleichen Formwerkzeug drückt das Werkzeug am zurückgewonnenem Druckgußträger nicht mehr einwandfrei ab und wird überspritzt.

Die Forderungen, im gleichen Formwerkzeug die dynamische und die statische Dichtung an dem Druckgußträger anzuformen, macht diese Werkzeuge in Herstellung und Instandhaltung sehr teuer, weil immer die sehr viel höheren Anforderungen an die Güte der dynamischen Dichtung, d.h. des Wellendichtringes, den Aufwand bestimmen.

Das Volumen der in die Werkzeuge einzulegenden Metallteile beeinflußt die Fertigungsbedingungen vor allem auch durch die Zeit bis zur gleichmäßigen Aufheizung auf die Temperaturen des Formwerkzeuges nachteilig.

Bei dem bekannten Konzept bestimmen die höheren technischen Forderungen zur Fertigung der dynamischen Dichtkante die Anforderungen an die Spritzgießmaschine und die Taktzeit; die einfacher zu fertigende statische Dichtung wird somit zwangsläufig mit einem zu hohen Aufwand gefertigt.

Die Fertigung der Dichtung nach dem bekannten Konzept erfordert hohe Investitionen in neue große Spritzgießmaschinen hoher Schließkraft mit höchster Präzision, die für die Fertigung von Radial-Wellendichtringen geeignet sein müssen, während vorhandene kleinere Spritzgießmaschinen für Radial-Wellendichtringe stillgelegt werden müssen, weil diese Produkte durch die neuen Dichtungen substituiert werden.

Ein Dichtungssystem für eine dynamische Wellenabdichtung besteht nicht nur aus dem Dichtelement sondern auch aus der Gegenlauffläche auf der rotierenden Fläche. Sollte tatsächlich einmal eine solche Abdichtung wegen Leckage ausfallen und ersetzt werden müssen, dann wird heute in der Regel zum Ersatz von Radial-Wellendichtringen die Abdichtung im Zweiteinbau um ca. 1 mm tiefer in die Gehäusebohrung eingedrückt. Hierdurch wird erreicht, daß vergleichbare Bedingungen zum Ersteinbau, d.h. neue Dichtlippe auf neuer Gegenlaufläche der Welle, erzielt werden. Dies ist jedoch nur möglich, wenn für Ersteinbau und Reparatur zwei unterschiedliche Teile gefertigt werden, die auch zwei unterschiedliche, relativ teure Druckgußteile und zwei unterschiedliche Spritzwerkzeuge erfordern.

Die Betriebsbedingungen erfordern in der Regel für die dynamische Dichtung einen wesentlich teureren Elastomer-Werkstoff (in der Regel auf Basis Fluor-Elastomer FPM) als für die statische Dichtung. Vor allem bei großen Dichtungsmodulen würde es deutliche Kostenvorteile mit sich bringen, verschiedene elastomere Werkstoffe für die statische und dynamische Dichtung vorzusehen. Dies ist mit dem bekannten Konzept nicht zu leisten.

Die Erfindung behebt diese Schwierigkeiten mit einem Verfahren gemäß Anspruch 1 und mit einer Abdichtung gemäß Anspruch 2.

Die Erfindung führt zu folgenden Vorteile:
- das relativ teure Druckgußteil wird nur mit einwandfreien dynamischen Wellendichtringen verarbeitet, was die Ausschußrate senkt;
- ein gleiches Druckgußteil kann für Wellendichtringe unterschiedlicher Abmessungen sowohl beim Ersteinbau als auch beim Austausch (Reparatur) eingesetzt werden;
- sowohl für die Vormontage des Wellendichtringes an dem Blechring als auch für das Anspritzen der statischen Dichtung an dem Gußteil können verhältnismäßig einfach gestaltete Formwerkzeuge unter Verwendung vorhandener Spritzgießmaschinen eingesetzt werden;
- es ist ohne weiteres der Einsatz unterschiedlicher Elastomer-Werkstoffe für die Fertigung des Wellendichtringes einerseits und der statischen Dichtung andererseits möglich;
- bei der Erfindung brauchen für eine Kundendienstausführung nur die deutlich preiswerteren Metallträger und das Formwerkzeug für den Wellendichtring geändert zu werden.

Die Erfindung ist im folgenden anhand schematischer Zeichnungen an Ausführungsbeispielen mit weiteren Einzelheiten näher erläutert.

Es zeigen:
- Fig.1: eine auseinandergezogene Darstellung einer Wellenabdichtung für das abtriebsseitige Ende einer Kurbelwelle eines Kraftfahrzeugs sowie der Stirnwand des zugehörigen Kurbelwellengehäuses;
- Fig. 2: einen Teilschnitt durch eine erste Ausführung einer Abdichtung gemäß der Erfindung und
- Fig. 3: einen Teilschnitt durch eine zweite Ausführung einer Abdichtung gemäß der Erfindung.

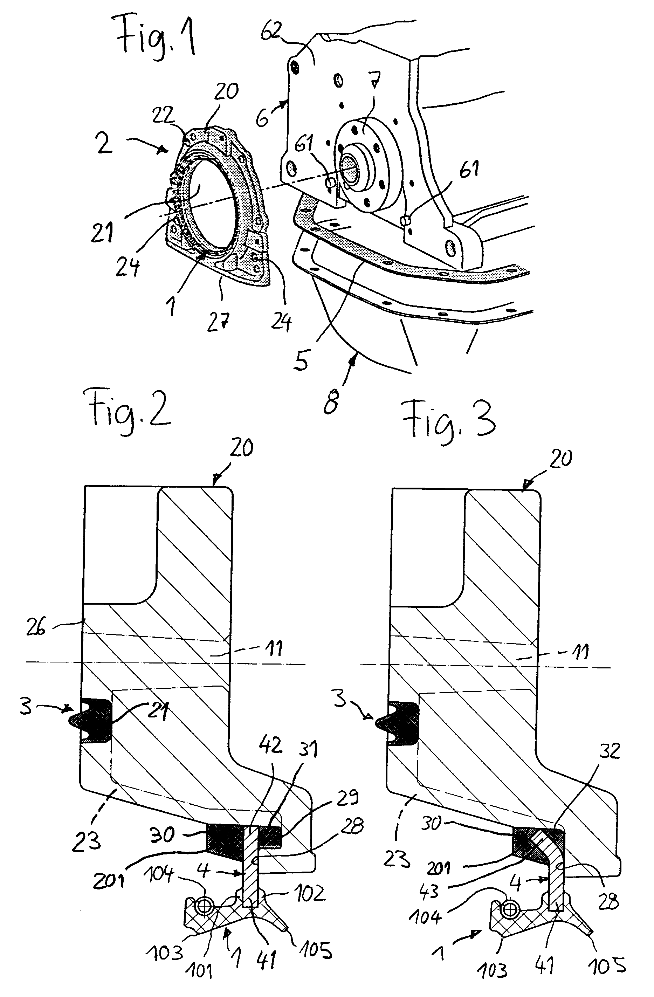

In der auseinandergezogenen Darstellung nach Fig. 1 ist der Aufbau einer Abdichtung für die Abtriebsseite einer Kurbelwelle eines Kraftfahrzeuges dargestellt.

Die insgesamt mit dem Bezugszeichen 2 bezeichnete Abdichtung hat als Dichtungsaufnahme ein Aluminium-Druckgußteil 20 mit darin vormontiertem Wellendichtring 1, einer Durchlaßöffnung 21 für eine Kurbelwelle 7, Durchstecklöchern 22 für Schrauben zur Befestigung an der Stirnwand 62 eines Kurbelgehäuses 6, Paßlöchern 24 zur Aufnahme von Paßstiften 61, einer in Fig. 1 nicht zu sehenden Gehäuseseite 26 und einer dazu senkrecht stehenden Unterseite 27, mit welcher die Dichtungsaufnahme gegen die Ölwannendichtung 5 einer an der Unterseite des Kurbelgehäuses 6 angebrachten Ölwanne 8 angedrückt ist.

Die in den Figuren 2 und 3 dargestellten axialen Teilschnitte der fertig montierten Dichtungsaufnahme 2 zeigen in vergrößertem Maßstab den Aufbau der Abdichtung in seinen Einzelheiten in zwei Alternativen, wobei gleiche Teile mit gleichen Bezugszahlen belegt sind.

Der Wellendichtring 1 ist von üblichem Aufbau mit Dichtlippe 103, welche von einer Wurmfeder 104 an die (nicht gezeigte) Kurbelwelle angedrückt wird, sowie mit Schutzlippe 105. Über Stege 101, 102 ist der Wellendichtring 1 in einem Vorfertigungsschritt an den inneren Abschnitt 41 eines Blechringes 4 mit einem üblichen Form- und Spritzwerkzeug anvulkanisiert.

In einem weiteren Schritt wird die vorgefertigte Wellendichtringeinheit aus dem Wellendichtring 1 und dem Blechring 4 in eine Spritzgießform unter radialer und axialer Pressung in eine axiale Aussparung 201 gegen einen Bund 28 des Druckgußteiles 20 eingepreßt, derart, daß die Dichtkante 103 des Wellendichtringes im geforderten engen radialen Toleranzbereich reproduzierbar gehalten ist. Oberhalb des Bundes 28 ist eine hinterschnittene Nut 29 in dem Druckgußteil beim Druckgießen eingeformt. Ferner ist in dem Druckgußteil 20 auf der Gehäuseseite 26 eine Nut 21 zur Aufnahme der statischen Dichtung 3 sowie ein Verbindungskanal 23 von dieser Nut 21 zur hinterschnittenen Nut 29 der Rückseite des Blechringes 4 sowie zu dem Bereich der Ausparung 201 auf der Vorderseite des Blechringes 4 eingeformt. Es können auch mehrere solche Verbindungskanäle 23 von der die Aussparung 201 umgebenden Ringnut 21 ausgehen.

In einem zweiten Formschritt werden dann gleichzeitig die statische Dichtung 3 und Ringe 30, 31 aus Elastomermaterial geformt, welche den äußeren Abschnitt 42 des Blechringes in fertiggestelltem Zustand der Abdichtung 2 einsäumen und an das Gußteil anbinden.

Die Abwandlung nach Fig. 3 unterscheidet sich dadurch, daß der äußere Abschnitt 43 des Blechringes 4 nach außen vom Bund 28 weggebogen ist, und daß nicht eigens eine hinterschnittene Nut 29 oberhalb des Bundes 28 ausgebildet ist. Vielmehr wird durch die Abbiegung des äußeren Abschnittes 42 des Blechringes 4 ein Ringkanal 32 zur Aufnahme von Elastomermaterial beim Anspritzen der statischen Dichtung 3 gebildet.

Im übrigen sind Herstellung, Aufbau und Anordnung der Abdichtung gemäß Fig. 3 gleich wie bei Fig. 2.

## Patentansprüche

1. Verfahren zum Herstellen einer Abdichtung (2) für das aus der Stirnwand (62) eines Gehäuses (6) austretende Ende einer Welle (7) sowie für die Stirnwand (62), mit einer als Gußteil ausgeführten Dichtungsaufnahme (20) mit einer Gehäuseseite (26), einer Durchlaßöffnung (21) für die Welle (7), einem in der Durchlaßöffnung sitzenden Wellendichtring (1) aus einem ersten Elastomermaterial und einer auf der Gehäuseseite (26) angeordneten statischen Dichtung (3) aus einem zweiten Elastomermaterial zum Abdichten gegenüber der Stirnwand (62) des Gehäuses (6), wobei der Wellendichtring (1) an einem inneren radialen Abschnitt (41) eines Blechringes (4) zur Bildung einer Wellendichtringeinheit anvulkanisiert wird und ein äußerer Abschnitt (42) des Blechringes an einem Bund (28) in einer Aussparung (201) der Dichtungsaufnahme (20) anliegt und beidseitig an der Dichtungsaufnahme durch zweites Elastomermaterial angebunden wird, welches mit der statischen Dichtung (3) zusammenhängt, dadurch **gekennzeichnet**, daß die Dichtungsaufnahme (20) als Leichtmetall-Druckgußteil hergestellt wird, daß der Blechring (4) von einer Seite der Dichtungsaufnahme (20), zu der hin die Aussparung (201) offen ist, unter plastischer Verformung der Dichtungsaufnahme so radial und axial eingepreßt wird, daß der mindestens teilweise radial verlaufende äußere Abschnitt (42, 43) des Blechringes beidseitig mit dem zweiten Elastomermaterial über einen Verbindungskanal (23) in der Dichtungsaufnahme (20) zu einer stirnwandseitigen Aufnahmenut (21) für die statische Dichtung (3) bei deren Anspritzen an die Dichtungsaufnahme umspritzt wird.

2. Abdichtung für das aus der Stirnwand (62) eines Gehäuses austretende Ende einer Welle (7) sowie für die Stirnwand (62), mit einer als Gußteil ausgeführten Dichtungsaufnahme (20) mit einer Gehäuseseite (26), einer Durchlaßöffnung (21) für die Welle (7), einem in der Durchlaßöffnung sitzenden Wellendichtring (1) aus einem ersten Elastomermaterial und einer auf der Gehäuseseite (26) angeordneten statischen Dichtung (3) aus einem zweiten Elastomermaterial zum Abdichten gegenüber der Stirnwand (62) des Gehäuses (6), wobei der Wellendichtring (1) an einem inneren radialen Abschnitt (41) eines Blechringes (4) zur Bildung einer Wellendichtringeinheit anvulkanisiert ist und ein äußerer Abschnitt (42, 43) des Blechringes an einem Bund (28) in einer Aussparung (201) der Dichtungsaufnahme anliegt und beidseitig an der Dichtungsaufnahme durch zweites Elastomermaterial angebunden ist, welches mit der statischen Dichtung (3) zusammenhängt, dadurch **gekennzeichnet**, daß die Dichtungsaufnahme als Leichtmetall-Druckgußteil (20) ausgeführt ist, daß die Aussparung (201) zur Gehäuseseite (26) der Dichtungsaufnahme hin offen ist und die Wellendichtringeinheit (1, 4) von der Gehäuseseite (26) her gegen den Bund (28) unter radialer und axialer Deformierung des Druckgußteiles (20) in die Aussparung (201) eingedrückt ist, und daß der äußere Abschnitt (42, 43) des Blechringes (4) mindestens teilweise radial verläuft und beidseitig von Ringen (30, 31, 32) gleichen Außendurchmessers aus zweitem Elastomermaterial eingesäumt ist, die über mindestens einen gemeinsamen Verbindungskanal (23) mit einer Nut (21) auf der Gehäuseseite (26) zur Aufnahme der statischen Dichtung (3) in Verbindung stehen.

3. Abdichtung nach Anspruch 2,
dadurch **gekennzeichnet**, daß der äußere Abschnitt (42) des Blechringes (4) radial verläuft, und daß der Ring (31) aus Elastomermaterial auf der dem Gehäuse (6) abgewandten Seite des Blechringes (4) in einer den Bund (28) hinterschneidenden Ringnut (29) aufgenommen ist.

4. Abdichtung nach Anspruch 2,
dadurch **gekennzeichnet**, daß der äußere Abschnitt (43) des Blechringes in Richtung vom Bund (28) weg abgebogen ist, so daß eine Ringnut zwischen dem Bund (28) und der Rückseite des äußeren Abschnittes (43) zur Formung eines Ringes (32) aus zweitem Elastomermaterial gebildet ist.

## Claims

1. Method for the manufacture of a seal (2) for the end of a shaft (7) passing out of the end wall (62) of a casing (6), as well as for the end wall (62), with a gasket receptacle (20), constructed as a casting and having a casing side (26), a passage opening (21) for the shaft (7), a shaft seal ring (1) located in the passage opening and made from a first elastomer material and a static gasket (3) located on the casing side (26) made from a second elastomer material for sealing with respect to the end wall (62) of the casing (6), the shaft seal ring (1) being vulcanized onto an inner radial portion (41) of a sheet metal ring (4) for the formation of a shaft seal ring unit and an outer portion (42) of the sheet metal ring engages on a collar (28) in a recess (201) of the gasket receptacle (20) and is fastened by second elastomer material to both sides of the gasket receptacle, said material being linked to the static gasket (3), characterized in that the gasket receptacle (20) is produced as a light metal pressure die casting, that the sheet metal ring (4) is so radially and axially pressed in from one side of the gasket receptacle (20) towards which the recess (201) is open and accompanied by plastic deformation of the gasket receptacle, that the at least partially radially directed, outer portion (42,43) of the sheet metal ring is injected round on either side with the second elastomer material by means of a connecting channel (23) in the gasket receptacle (20) to an end wall-side reception groove (21) for the static gasket (3) during its moulding to the gasket receptacle.

2. Seal for the end of a shaft (7) passing out of the end wall (62) of a casing (6), as well as for the end wall (62), with a gasket receptacle (20), constructed as a casting and having a casing side (26), a passage opening (21) for the shaft (7), a shaft seal ring (1) located in the passage opening and made from a first elastomer material and a static gasket (3) located on the casing side (26) made from a second elastomer material for sealing with respect to the end wall (62) of the casing (6), the shaft seal ring (1) being vulcanized onto an inner radial portion (41) of a sheet metal ring (4) for the formation of a shaft seal ring unit and an outer portion (42) of the sheet metal ring engages on a collar (28) in a recess (201) of the gasket receptacle (20) and is fastened by second elastomer material to both sides of the gasket receptacle, said material being linked to the static gasket (3), characterized in that the gasket receptacle is constructed as a light metal pressure die casting (20), that the recess (201) is open towards the casing side (26) of the gasket receptacle and the shaft seal ring unit (1,4) is pressed from the casing side (26) against the collar (28) under radial and axial deformation of the pressure die casting (20) in the recess (201) and that the outer portion (42,43) of the sheet metal ring (4) is at least partly radially directed and on either side is bordered by rings (30,31,32) having the same external diameter and made from a second elastomer material and connected by means of at least one common connecting channel (23) to a groove (21) on the casing side (26) for receiving the static gasket (3).

3. Seal according to claim 2, characterized in that the outer portion (42) of the sheet metal ring (4) is directed radially and that the ring (31) of elastomer material on the side of the sheet metal ring (4) remote from the casing (6) is received in a circular groove (29) undercutting the collar (28).

4. Seal according to claim 2, characterized in that the outer portion (43) of the sheet metal ring is bent away from the collar (28), so that a circular groove is formed between the collar (28) and the back of the outer portion (43) for shaping a ring (32) from second elastomer material.

## Revendications

1. Procédé de fabrication d'un joint d'étanchéité (2), pour l'extrémité d'un arbre (7) sortant de la paroi frontale (62) d'un carter (6) ainsi que pour la paroi frontale (62), avec un logement de joint d'étanchéité (20) réalisé sous forme de pièce moulée avec une partie carter (26) , une ouverture de passage (21) pour l'arbre (7), une bague d'étanchéité d'arbre (1) placée dans l'ouverture de passage et réalisée en un premier matériau élastomère et un joint d'étanchéité statique (3) disposé du côté carter (26) et réalisé en un deuxième matériau élastomère, pour isoler de façon étanche vis-à-vis da la paroi frontale (62) du carter (6), la bague d'étanchéité d'arbre (1) étant vulcanisée sur une section (41) radiale intérieure d'une bague en tôle (4) pour constituer un ensemble de bague d'étanchéité d'arbre et une section extérieure (42) de la bague en tôle appuyant sur une collerette (28) dans un évidement (201) du logement de joint d'étanchéité et étant liée des deux côtés au logement de joint d'étanchéité au moyen d'un deuxième matériau élastomère, qui procure une cohésion avec le joint d'étanchéité statique (3), caractérisé en ce que le logement de joint d'étanchéité (20) est fabriqué sous forme de pièce moulée sous pression en alliage léger, en ce que la bague en tôle (4) est pressée radialement et axialement depuis un côté du logement de joint d'étanchéité (20) vers lequel l'évidement (201) est ouvert, avec accompagnement d'une déformation plastique du logement de joint d'étanchéité, de manière que la section extérieure (42, 43), s'étendant au moins partiellement radialement, de la bague en tôle soit enrobée par injection des deux côtés, par le deuxième matériau élastomère, par l'intermédiaire d'un canal de liaison (23) ménagé dans le logement de joint d'étanchéité (20), pour donner une gorge de logement (21) située du côté de la paroi frontale et destinée au joint d'étanchéité statique (3), ceci étant fait lors de l'injection sur le logement de joint d'étanchéité.

2. Joint d'étanchéité pour l'extrémité d'un arbre (7) sortant de la paroi frontale (62) d'un carter ainsi que pour la paroi frontale (62) avec un logement de joint d'étanchéité (20), réalisé sous forme de pièce moulée, dotée d'une partie carter (26), d'une ouverture de passage (21) pour l'arbre (7), d'une bague d'étanchéité d'arbre (1) siégeant dans l'ouverture de passage, réalisée en un premier matériau élastomère, et d'un joint d'étanchéité statique (3) disposé du côté carter (26) et réalisée en un deuxième matériau élastomère pour assurer une étanchéité vis-à-vis de la paroi frontale (62) du carter (6), la bague d'étanchéité d'arbre (1) étant vulcanisée sur une section (41) radiale intérieure d'une bague en tôle (4) pour constituer un ensemble de bague d'étanchéité d'arbre et une section extérieure (42, 43) de la bague en tôle appuyant sur une collerette (28) dans un évidement (201) du logement de joint d'étanchéité et étant lié des deux côtés au logement de joint d'étanchéité au moyen d'un deuxième matériau élastomère qui procure une cohésion avec le joint d'étanchéité statique (3), caractérisé en ce que le logement de joint d'étanchéité est fabriqué sous forme de pièce moulée sous pression en alliage léger, en ce que l'évidement (201) est ouvert vers le côté carter (26) du logement de joint d'étanchéité et l'ensemble de joint d'étnchéité (1, 4) est enfoncé dans l'évidement (201), depuis le côté carter (26) du logement de joint d'étanchéité, contre la collerette (28), avec une déformation radiale et axiale de la pièce moulée sous pression (20), et en ce que la section extérieure (42, 43) de la bague en tôle (4) s'étend au moins partiellement radialement et est ourlé des deux côtés des bagues (30, 31, 32) de même diamètre réalisée dans le deuxième matériau élastomère, reliées, par l'intermédiaire d'un canal de liaison (23) commun, avec une gorge (21), du côté carter (26), en vue de recevoir le joint d'étanchéité statique (3).

3. Joint d'étanchéité selon la revendication 2, caractérisé en ce que la section extérieure (42) de la bague en tôle (4) s'étend radialement, et en ce que la bague (31) en matériau élastomère est logée sur la face, opposée au carter (6), de la bague en tôle (4), dans une rainure annulaire (29) produisant un effet de contre-dépouille sur la collerette (28).

4. Joint d'étanchéité selon la revendication 2, caractérisé en ce que la section extérieure (43) de la bague en tôle est repliée pour s'écarter de la collerette (28), de sorte qu'une gorge annulaire est constituée entre la collerette (28) et la face arrière de la section extérieure (43), pour former une bague (32) réalisée dans le deuxième matériau élastomère.
